# EUROPEAN PATENT APPLICATION

(11) **EP 4 722 161 A1**
(43) Date of publication of application: **08.04.2026**
(21) Application number: 23939891.0
(22) Date of filing: 06.12.2023
(51) Int. Cl.: C01G 45/10, B09B 3/70, B09B 3/80

(54) **METHOD FOR PRODUCING MANGANESE SULFATE SOLUTION USING SULFUR DIOXIDE GAS REDUCTION LEACHING METHOD**

(30) Priority: 02.06.2023 KR 20230071769
(71) Applicant: Korea Zinc Co., Ltd., Seoul 03159 (KR); Kemco, Seoul 03159 (KR)
(72) Inventor: KIM, Min Ji, Ulsan 44754 (KR); LEE, Je Joong, Seoul 06041 (KR)
(74) Representative: Angerhausen, Christoph
(86) International application number: PCT/KR2023/019986
(87) International publication number: WO 2024/248252

(57) **Abstract**

A method for producing an aqueous manganese sulfate solution using a sulfur dioxide gas reduction leaching method includes: a raw material preparation process of preparing a manganese-containing by-product containing manganese and impurities; a pulverizing and washing process of pulverizing and washing the manganese-containing by-product; a reduction leaching process of leaching a pulverized manganese-containing by-product obtained by the pulverizing and washing process; a neutralization process of neutralizing a leached liquid produced in the reduction leaching process; a first purification process of purifying a neutralized liquid produced in the neutralization process; and a second purification process of further purifying a first-purified liquid produced in the first purification process. The reduction leaching process is performed using an inorganic acid and a sulfur dioxide gas.

## Description

### TECHNICAL FIELD

The present disclosure relates to a method for producing an aqueous manganese sulfate solution from manganese-containing by-products produced during a zinc hydrometallurgical process. In particular, the present disclosure pertains to a method for producing a high-purity aqueous manganese sulfate solution that can be used as a raw material for a precursor among cathode active materials of a lithium ion secondary battery.

### BACKGROUND

Manganese sulfate is mainly produced from a low-purity manganese ore or a manganese-containing material through processes such as leaching, precipitation, crystallization, and the like. Meanwhile, a wet reaction is required for the production of manganese sulfate, which is used as a raw material for a precursor among cathode active materials for a lithium-ion secondary battery. Among others, leaching with acid needs to be performed from a manganese-containing material in a solid state.

In this process, the use of a reducing agent is required to create a reducing atmosphere. However, there is a problem in that process operating costs increase due to excessive use of a reducing agent for complete leaching of manganese.

### SUMMARY

Various embodiments of the present disclosure provide a method for producing manganese sulfate, especially a high-purity aqueous manganese sulfate solution, from manganese-containing by-products. In particular, there is proposed a process with high recovery rate and economic feasibility in which a reducing gas containing a sulfur dioxide gas is used as a leaching aid to replace a reducing agent used in the reduction leaching process.

Further, various embodiments of the present disclosure provide a method for producing a high-purity aqueous manganese sulfate solution through neutralization and purification of a leached liquid obtained in a manganese reduction leaching process.

According to one embodiment of the present disclosure, there is provided a method for producing an aqueous manganese sulfate solution using a sulfur dioxide gas reduction leaching method, including: a raw material preparation process of preparing a manganese-containing by-product containing manganese and impurities; a pulverizing and washing process of pulverizing and washing the manganese-containing by-product; a reduction leaching process of leaching a pulverized manganese-containing by-product obtained by the pulverizing and washing process; a neutralization process of neutralizing a leached liquid produced in the reduction leaching process; a first purification process of purifying a neutralized liquid produced in the neutralization process; and a second purification process of further purifying a first-purified liquid produced in the first purification process, wherein the reduction leaching process is performed using an inorganic acid and a sulfur dioxide gas.

In one embodiment, an average particle size of the pulverized manganese-containing by-product may be 1 *µ*m to 25 *µ*m.

In one embodiment, the pulverizing and the washing may be performed in the same reactor.

In one embodiment, in the pulverizing and washing process, the manganese-containing by-product may be washed with diluted acid and water, the diluted acid may be at least one selected from the group of sulfuric acid, hydrochloric acid, and nitric acid, and the concentration of the diluted acid may be 10 g/L to 100 g/L.

In one embodiment, an amount of water added in the pulverizing and washing process may be 1.5 to 3 times an amount of the manganese-containing by-product by weight ratio.

In one embodiment, the neutralization process may be performed using a manganese-containing by-product as a neutralizing agent.

In one embodiment, in the neutralization process, a sulfur dioxide gas may be additionally injected.

In one embodiment, the first purification process may include a process of removing the impurities using a precipitation method, and the second purification process may include a process of removing the impurities using a solvent extraction method.

In one embodiment, the first purification process may be performed through a precipitation reaction of the impurities by adding at least one selected from the group of sodium sulfide, sodium hydrosulfide, ammonium hydrogen sulfide, and hydrogen sulfide as a precipitant.

In one embodiment, the second purification process may include a loading process of extracting manganese contained in the first-purified liquid into an organic phase, a scrubbing process of washing the organic phase from which manganese is extracted with water, and a stripping process of recovering manganese in the form of the aqueous manganese sulfate solution by adding sulfuric acid to the organic phase after the scrubbing process.

According to the present disclosure in some embodiments, it is possible to produce manganese sulfate, especially a high-purity aqueous manganese sulfate solution, from manganese-containing by-products.

In the case of the reduction leaching process included in the present disclosure, unlike the leaching using a conventional reducing agent, a relatively high recovery rate and high economic efficiency can be achieved by using a reducing gas.

Manganese sulfate according to the present disclosure can be suitably used as a raw material for a precursor among cathode active materials for a lithium secondary battery.

### BRIEF DESCRIPTION OF DRAWINGS

FIG. 1 is a flowchart showing a method for producing an aqueous manganese sulfate solution using a sulfur dioxide gas reduction leaching method according to an embodiment of the present disclosure.
FIG. 2 is a flowchart showing a second purification process according to an embodiment of the present disclosure.

### DETAILED DESCRIPTION

Embodiments of the present disclosure are illustrated for describing the technical spirit of the present disclosure. The scope of the claims according to the present disclosure is not limited to the embodiments described below or to the detailed descriptions of these embodiments.

A wet reaction is required to produce manganese sulfate, which is used as a raw material for a precursor among cathode active materials for a lithium-ion secondary battery. Among them, leaching with acid needs to be performed from a solid-state manganese-containing material.

In this process, unlike the embodiment of the present disclosure, a reducing agent such as hydrogen peroxide (H₂O₂) or the like may be used to create a reducing atmosphere. In this case, there is a problem in that process operating costs increase due to excessive use of a reducing agent for complete leaching of manganese.

The method for producing an aqueous manganese sulfate solution according to an embodiment of the present invention can achieve a high recovery rate and high economic efficiency by using a reducing gas including a sulfur dioxide gas (SO₂ gas) as a leaching aid.

Hereinafter, the present disclosure will be described with reference to the drawings.

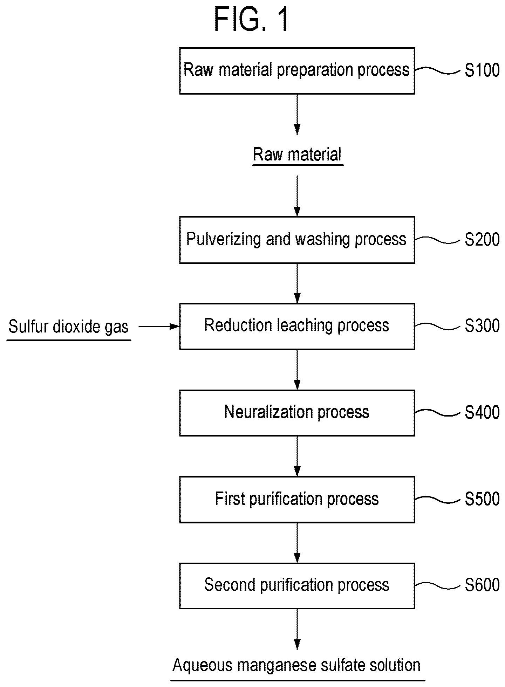

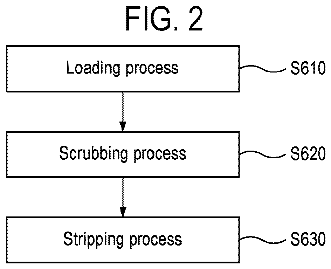

FIG. 1 is a flowchart showing a method for producing an aqueous manganese sulfate solution using a sulfur dioxide gas reduction leaching method according to an embodiment of the present disclosure. FIG. 2 is a flowchart showing a second purification process according to an embodiment of the present disclosure.

Referring to FIGS. 1 and 2, the method for producing an aqueous manganese sulfate solution using a sulfur dioxide gas reduction leaching method according to an embodiment of the present disclosure may include: a raw material preparation process (S100) of preparing a manganese-containing by-product containing manganese and impurities; a pulverizing and washing process (S200) of pulverizing and washing the manganese-containing by-product, a reduction leaching process (S300) of leaching a pulverized manganese-containing by-product pulverized in the pulverizing and washing process, a neutralization process (S400) of neutralizing a leached liquid produced in the reduction leaching process, a first purification process (S500) of purifying a neutralized liquid produced in the neutralization process, and a second purification process (S600) of further purifying a first-purified liquid produced in the first purification process.

### Raw Material Preparation Process (S100)

In the raw material preparation process (S100), a manganese-containing by-product containing manganese and impurities may be prepared. In one embodiment, the manganese-containing by-product may be produced in a hydrometallurgical process of zinc. In this case, the manganese-containing by-product may be prepared together with a zinc process solution in the raw material preparation process (S100).

The manganese-containing by-product as a manganese-containing raw material for producing an aqueous manganese sulfate solution may contain at least one selected from the group of oxide, hydroxide, sulfide, and sulfur oxide. In the manganese-containing by-product, manganese may be contained in the form of manganese dioxide (MnO₂).

In one embodiment, the manganese-containing by-product may contain at least one selected from the group of calcium (Ca), potassium (K), lead (Pb), zinc (Zn), magnesium (Mg), sodium (Na), and silicon (Si) as impurities other than manganese (Mn). In one embodiment, the composition of the manganese-containing by-product is shown in Table 1 below. The unit is wt%.

**[Table 1]**

| Mn | Ca | K | Pb | Zn | Mg | Na | Si |
|---|---|---|---|---|---|---|---|
| 30 to 45 | 0.1 to 3.5 | 0.1 to 3.5 | 0.1 to 4.0 | 0.1 to 4.0 | 0 to 0.05 | 0.05 to 0.3 | 0 to 0.05 |

In one embodiment, the manganese-containing by-product may contain oxygen (O). For example, most of the parts not shown in Table 1 may be oxygen (O).

### Pulverizing and Washing Process (S200)

In the pulverizing and washing process (S200), the manganese-containing by-product may be pulverized and washed. The pulverizing and washing process (S200) correspond to a pretreatment process for the manganese-containing by-product. In the pulverizing and washing process (S200), a pulverizing process may be performed to reduce the particle size of the manganese-containing by-product. Additionally, a washing process may be performed to remove at least some of the impurities contained in the manganese-containing by-product. In the raw material preparation process (S100), the manganese-containing by-product may be prepared together with a zinc process solution. In the washing process, the zinc process solution may be washed with water.

The average particle size of the pulverized manganese-containing by-product may be about 1 µm to 25 µm. The average particle size of the manganese-containing by-product before the pulverizing process is performed may be about 500 µm to 900 µm. The average particle size of the manganese-containing by-product may be lowered to about 1 µm to 25 µm by the pulverizing process. Accordingly, the leaching efficiency in the reduction leaching process (S300) can be increased by lowering the average particle size of the manganese-containing by-product through the pulverizing process before performing the reduction leaching process (S300). If the average particle size of the manganese-containing by-product is large, leaching may be substantially difficult to perform in the subsequent reduction leaching process (S300) due to low reactivity. That is, if the average particle size of the manganese-containing by-product is larger than 25 µm, leaching efficiency may be reduced. For example, the pulverizing process may be performed using a milling machine such as a ball mill or rod mill.

In the pulverizing and washing process (S200), at least some of the impurities in the manganese-containing by-product may be removed. In one embodiment, in the pulverizing and washing process (S200), the manganese-containing by-product is washed with diluted acid and water to remove at least some of the impurities. In one embodiment, the diluted acid may be at least one selected from the group of sulfuric acid (H₂SO₄), hydrochloric acid (HCl), and nitric acid (HNO₃). In one embodiment, the concentration of the diluted acid may be 10 g/L to 100 g/L.

The amount of water introduced for the washing process may be 1.5 to 3 times the amount of the manganese-containing by-product by weight ratio. If the amount of water introduced for the washing process is less than 1.5 times the amount of the manganese-containing by-product, the impurity removal rate may be less than 50%. If the amount of water introduced for the washing process is more than 3 times the amount of the manganese-containing by-product, the impurity removal rate may be increased. However, the amount of water used in the process increases, which may reduce economic feasibility.

In one embodiment, the pulverizing process and the washing process may be performed simultaneously. The pulverizing process and the washing process may be performed in the same reactor. For example, the pulverizing process and the washing process may be performed simultaneously using a wet pulverizing machine. Thereafter, some of the impurities (calcium, potassium, magnesium, sodium, etc.) contained in the manganese-containing by-product may be removed by performing solid-liquid separation. When the pulverizing process and the washing process are performed simultaneously, the process for producing the aqueous manganese sulfate solution may be simplified. This is because in the process of producing the aqueous manganese sulfate solution, the subsequent process after the pulverizing process and the washing process involves a reaction in water. Additionally, if the pulverizing process and the washing process are performed in the same reactor, the number of reactors can be reduced. In another embodiment, the pulverizing process and the washing process may be performed separately.

### Reduction Leaching Process (S300)

In the reduction leaching process (S300), the pulverized manganese-containing by-product pulverized in the pulverizing and washing (S200) is leached. The reduction leaching process (S300) may be performed after the pulverizing and washing process (S200). In the reduction leaching process (S300), the pulverized manganese-containing by-product may be leached using an inorganic acid and a reducing gas. The reducing gas may be a sulfur dioxide gas (SO₂ gas). In one embodiment, the reduction leaching process (S300) may be performed using an inorganic acid and sulfur dioxide. For example, the inorganic acid may be at least one selected from the group of sulfuric acid (H₂SO₄), hydrochloric acid (HCl), and nitric acid (HNO₃). The inorganic acid may be an inorganic acid diluted with water.

In one embodiment, the concentration of the sulfur dioxide gas may be 10% or more, in which case the dissolution rate of manganese may be 99.6% or more. The sulfur dioxide gas supplied and not participated in the reaction may be recycled and reused in the reduction leaching process (S300). If the concentration of the sulfur dioxide gas is less than 10%, the circulating amount of a gas other than the sulfur dioxide gas increases, which may cause a decrease in the dissolution rate. Therefore, it may be desirable for the concentration of the sulfur dioxide gas to be 10% or more. However, the present disclosure is not limited thereto. In another embodiment of the present disclosure, a sulfur dioxide gas with a concentration of less than 10% may be used. The gas other than the sulfur dioxide gas may be an inert gas, oxygen, or an air.

The sulfur dioxide gas can be injected through an injection pipe. For example, the process solution may be stored in the reaction tank, and the sulfur dioxide gas may be injected into the reaction tank through an injection pipe installed at the bottom of the reaction tank. Therefore, the sulfur dioxide gas can react with manganese in the process solution.

The sulfuric acid and the sulfur dioxide gas may be used in the reduction leaching process. In this case, the sulfur dioxide gas reacts with water to produce sulfurous acid through reaction formula 1 and reaction formula 2 below, and manganese is leached from the manganese-containing by-product in the form of manganese sulfate (MnSO₄) in a reducing atmosphere. This may produce a leached liquid.

[reaction formula 1] SO₂(g) → SO₂(aq)

[reaction formula 2] MnO₂ + SO₂(aq) → MnSO₄

Manganese in the manganese-containing by-product mainly exists in the form of manganese dioxide (MnO₂). Since manganese in manganese dioxide is tetravalent, leaching of manganese may not be easy to perform. On the other hand, leaching of divalent manganese can be easily performed. Therefore, in order to leach manganese, it is necessary to reduce manganese in manganese dioxide in the manganese-containing by-product to divalent manganese. In this regard, in the embodiment of the present disclosure, tetravalent manganese can be reduced to divalent manganese by using a sulfur dioxide gas as a reducing agent. Thus, a leached liquid can be produced from the manganese-containing by-product in the form of manganese sulfate (see reaction formula 1 and reaction formula 2 above).

The reduction leaching process (S300) may be performed at about 20 degrees C to 60 degrees C. The reduction leaching process (S300) is started at the room temperature. During the leaching reaction, the internal temperature may rise to 60 degrees C due to an exothermic reaction. This may mean that no additional heat source is needed. Therefore, the reduction leaching process (S300) can be an economical process. The sulfuric acid concentration in the leachate may be 25 g/L to 100 g/L. The pH of the leachate may be 1 or less. In one embodiment, in the reduction leaching process (S300), not only manganese but also other impurities may be leached. For example, impurities such as calcium (Ca), potassium (K), lead (Pb), zinc (Zn), and the like may be leached together with manganese and may be included in the leached liquid.

The manganese concentration of the leached liquid obtained in the reduction leaching process (S300) may be about 60 g/L to 100 g/L. For example, the manganese concentration in the leached solution may be 61 g/L to 64 g/L. In view of this, water in an amount about 1.5 to 3 times the amount of the pulverized manganese-containing by-product by weight ratio may be used to dilute inorganic acid.

Sulfurous acid produced from the sulfur dioxide gas takes the role of a leachate, which can make the use amount of inorganic acid smaller than in a general acid leaching process. In more detail, sulfurous acid may be produced from a sulfur dioxide gas according to reaction formula 3 below, and sulfuric acid may be produced from sulfurous acid according to reaction formula 4. Therefore, there is no need to maintain inorganic acid and manganese at a one-to-one equivalent. In other words, the amount of inorganic acid used may be reduced.

[reaction formula 3] SO₂ + H₂O → H₂SO₃

[reaction formula 4] 2H₂SO₃ + O₂ → 2H₂SO₄

### Neutralization Process (S400)

In the neutralization process (S400), the leached liquid produced in the reduction leaching process (S300) may be neutralized. The neutralization process (S400) may be performed after the reduction leaching process (S300). When obtaining the leached liquid, if the leached liquid is produced in a high pH atmosphere, the leached liquid may be produced in a small amount. In the embodiment of the present disclosure, the neutralization process (S400) may be performed after performing the reduction leaching process (S300) in an acidic atmosphere having a low pH to obtain a sufficient amount of leached liquid.

In the neutralization process (S400), a neutralizing agent is added to increase the pH of the leached liquid produced in the reduction leaching process (S300). The addition of the neutralizing agent may be performed in preparation for the purification process to be performed later. The neutralizing agent may be at least one selected from the group of a manganese-containing by-product, sodium hydroxide (NaOH), sodium carbonate (Na₂CO₃), calcium hydroxide (Ca(OH)₂), magnesium hydroxide (Mg(OH)₂), calcium oxide (CaO), and magnesium oxide (MgO). Preferably, the neutralization process (S400) may be performed by using a manganese-containing by-product in the form of a pulverized manganese-containing by-product as a neutralizing agent. There is no problem even if the amount of impurities increases due to the addition of the manganese-containing by-product. This is because the first purification process (S500) and the second purification process (S600) are performed after the neutralization process (S400).

If the neutralization process (S400) is performed using a manganese-containing by-product, it is possible to reduce the amount of separately added neutralizing agent, thereby reducing costs. Additionally, the introduction of other impurities can be prevented, and the concentration of manganese in the neutralized liquid can be increased. When the manganese-containing by-product is used as the neutralizing agent, a reducing gas (e.g., sulfur dioxide gas) may be additionally injected in the neutralization process (S400) to dissolve valuable metals contained in the additionally added manganese-containing by-product. In this case, a leaching reactor and a neutralization reactor may be configured in series.

After the neutralization process (S400) is performed, the pH of the neutralized liquid may be about 3 to 5, preferably about 4 to 5.

### First Purification Process (S500)

In the first purification process (S500), the neutralized liquid produced in the neutralization process (S400) may be purified. The neutralized liquid may be a neutralized leached liquid. The first purification process (S500) is a process of removing impurities in the neutralized liquid after the neutralization process (S400).

The first purification process (S500) may be a process of removing impurities using a precipitation method. In the first purification process (S500), at least one selected from the group of sodium sulfide (Na₂S), sodium hydrosulfide (NaSH), ammonium hydrogen sulfide (NH₄HS), and hydrogen sulfide (H₂S) may be used as a precipitant to remove heavy metal impurities. Further, in the first purification process (S500), at least one selected from the group of sodium fluoride (NaF), oxalic acid (C₂H₂O₄), and sodium oxalate (Na₂C₂O₄) may be used as a precipitant to remove light metal impurities. This makes it possible to remove impurities such as zinc, lead, cadmium, cobalt, nickel, calcium, magnesium, and the like. In one embodiment, when sodium hydrosulfide (NaSH) is used as a precipitant, a reaction occurs as shown in reaction formula 5 below. In one embodiment, when sodium fluoride (NaF) is used as a precipitant, a reaction occurs as shown in reaction formula 6 below.

[reaction formula 5] 2M_{H}SO₄ + 2NaSH → Na₂SO₄ + H₂SO₄ + 2M_{H}S↓ (where M_{H} is a heavy metal such as Zn, Pb, Cd, Co, Ni, Cu, or the like)

[reaction formula 6] M_{L}SO₄ + 2NaF → Na₂SO₄ + M_{L}F₂↓ (where M_{L} is a light metal such as Ca, Mg, or the like)

The first purification process (S500) may be performed at about 20 degrees C to 60 degrees C.

A precipitant for removing heavy metal impurities may be added at an equivalent ratio of about 0.8 to 1.4 with respect to the heavy metals contained in the neutralized liquid. If the precipitant for removing heavy metal impurities is added at an equivalent ratio of less than 0.8 with respect to the heavy metal, a heavy metal removal rate may be less than 85% and a complete reaction may not occur. If the precipitant for removing heavy metal impurities is added at an equivalent ratio of more than 1.4 with respect to the heavy metal, impurities resulting from the precipitant may be introduced excessively, which may adversely affect the process and may reduce economic feasibility.

A precipitant for removing light metal impurities may be added at an equivalent ratio of about 1.0 to 2.5 with respect to the light metal contained in the neutralized liquid. If the precipitant for removing light metal impurities is added at an equivalent ratio of less than 1.0 with respect to the light metal, a light metal removal rate may be less than 90% and a complete reaction may not occur. If the precipitant for removing light metal impurities is added at an equivalent ratio of more than 2.5 with respect to the light metal, impurities resulting from the precipitant may be introduced excessively, which may adversely affect the process and may reduce economic feasibility.

After the first purification process (S500) is performed, each of the contents of zinc, lead cadmium, nickel, copper, and cobalt contained in the first-purified liquid may be lowered to 5 mg/L or less. After the first purification process (S500) is performed, each of the contents of calcium and magnesium contained in the first-purified liquid may be lowered to 50 mg/L or less.

### Second Purification Process (S600)

In the second purification process (S600), the first-purified liquid produced in the first purification process (S500) may be further purified. The second purification process (S600) may be performed after the first purification process (S500). The second purification process (S600) may be a process of removing impurities using a solvent extraction method. An organic extractant may be used to remove impurities such as sodium (Na) and potassium (K) in the second purification process (S600). In one embodiment, the second purification process (S600) may include a loading process (S610), a scrubbing process (S620), and a stripping process (S630). As the organic extractant, at least one selected from the group of di-2-ethylhexyl phosphoric acid, mono-2-ethylhexyl (2-ethylhexyl) phosphonate, and bis(2,4,4-trimethylpentyl) phosphinic acid may be used.

The loading process (S610) may be a process of extracting manganese contained in the first-purified liquid into an organic phase. The loading process (S610) may be a process of extracting manganese contained in the first-purified liquid produced in the first purification process (S500) into an organic phase using an organic extractant. The reaction temperature in the loading process (S610) may be about 30 degrees C to 50 degrees C. If the reaction temperature in the loading process (S610) is about 30 degrees C to 50 degrees C, the reaction of the organic extractant may be most active. If the reaction temperature in the loading process (S610) is 30 degrees C or lower, the viscosity of the organic extractant may increase and the reactivity may decrease. If the reaction temperature in the loading process (S610) exceeds 50 degrees C, the amount of components volatilized is large, which may reduce process efficiency. The amount of organic phase added in the loading process (S610) may be about 3 to 6 by volume ratio with respect to the aqueous phase. If the amount of the organic phase with respect to the aqueous phase in the loading process (S610) is less than 3 by volume ratio, the bonding of the target metal and the organic extractant is not complete, and the extraction rate may be 90% or less. If the amount of the organic phase with respect to the aqueous phase in the loading process (S610) exceeds 6 by volume ratio, the process cost may increase due to the excessive use of the organic extractant. The pH range in the loading process (S610) may be about 4 to 5. In order to adjust the pH range in the loading process (S610) to 4 to 5, at least one selected from the group of sodium hydroxide (NaOH), sodium carbonate (Na₂CO₃), and sodium sulfate (Na₂SO₄) may be used.

When the extraction of manganese into the organic phase is completed by mixing the aqueous phase and the organic phase, phase separation may occur due to the difference in specific gravity between the organic phase and the aqueous phase. The organic phase containing manganese may be subjected to the scrubbing process (S620).

The scrubbing process (S620) may be a process of washing, with water, the organic phase from which manganese has been extracted. The scrubbing process (S620) may be a process of removing impurities in the loaded organic phase using water. The reaction temperature in the scrubbing process (620) may be about 30 degrees C to 50 degrees C. If the reaction temperature in the scrubbing process (620) is about 30 degrees C to 50 degrees C, the reaction of the organic extractant may be most active. If the reaction temperature in the scrubbing process (620) is 30 degrees C or lower, the viscosity of the organic extractant may increase and the reactivity may decrease. If the reaction temperature in the scrubbing process (620) exceeds 50 degrees C, the amount of components volatilized may be large and the process efficiency may be reduced. The organic phase may be added in an amount of about 5 to 10 by volume ratio with respect to the aqueous phase in the scrubbing process (620). The scrubbing process (620) is a process of washing impurities other than the target metal. If the addition amount of the organic phase with respect to the aqueous phase in the scrubbing process (620) is less than 5 by volume ratio, the impurity removal rate may be 85% or less. If the addition amount of the organic phase with respect to the aqueous phase in the scrubbing process (620) exceeds 10 by volume ratio, impurities can be completely removed. However, process costs may increase due to an increase in unnecessary water usage. By washing the organic phase containing manganese with water, it is possible to remove impurities including sodium and potassium contained in the organic phase. The organic phase containing manganese whose purity has been increased by removing impurities may be subjected to the stripping process (S630).

In the stripping process (S630), a second-purified liquid may be generated by adding sulfuric acid to the organic phase after the scrubbing process (S620). The second-purified liquid may be an aqueous manganese sulfate solution. That is, manganese can be recovered in the form of an aqueous manganese sulfate solution by adding sulfuric acid to the organic phase after the scrubbing process (S620) in the stripping process (S630). The stripping process (S630) may be a process of back-extracting manganese contained in the organic phase into an aqueous phase. The reaction temperature in the stripping process (S630) may be about 30 degrees C to 50 degrees C. If the reaction temperature in the stripping process (S630) is about 30 degrees C to 50 degrees C, the reaction of the organic extractant may be most active. If the reaction temperature in the stripping process (S630) is 30 degrees C or lower, the viscosity of the organic extractant may increase and the reactivity may decrease. If the reaction temperature in the stripping process (S630) exceeds 50 degrees C, the amount of components volatilized may be large, which may reduce process efficiency. The addition amount of the organic phase with respect to the aqueous phase in the stripping process (S630) may be about 5 to 10 by volume ratio. If the addition amount of the organic phase with respect to the aqueous phase in the stripping process (S630) is less than 5 by volume ratio, complete extraction of manganese is possible, but water usage may increase. Therefore, the manganese content in the aqueous manganese sulfate solution may be lowered. If the addition amount of the organic phase with respect to the aqueous phase in the stripping process (S630) exceeds 10 by volume ratio, the back-extraction efficiency of manganese may be reduced. The pH range in the stripping process (S630) may be about 0.5 to 1.5. Sulfuric acid (H₂SO₄) may be used to adjust the pH range in the stripping process (S630) to about 0.5 to 1.5.

In this way, manganese sulfate (MnSO₄) from which impurities have been removed can be recovered in the form of an aqueous solution. The aqueous manganese sulfate solution according to the embodiment of the present disclosure may have a manganese content of about 115 g/L to 135 g/L. The composition of the aqueous manganese sulfate solution is shown in Table 2 below.

**[Table 2]**

| Mn | Ca | K | Pb | Zn | Mg | Na | Si |
|---|---|---|---|---|---|---|---|
| 115 g/L to 135 g/L | ≤200 mg/L | ≤250 mg/L | ≤50 mg/L | ≤50 mg/L | ≤300 mg/L | ≤300 mg/L | ≤200 mg/L |

Therefore, according to the embodiment of the present disclosure, manganese sulfate, particularly a high-purity aqueous manganese sulfate solution, can be produced from a manganese-containing by-product.

In the case of the reduction leaching process included in the embodiment of the present disclosure, unlike the leaching using the conventional reducing agent, a relatively high recovery rate and high economic efficiency can be achieved by using a reducing gas.

Manganese sulfate produced according to the embodiment of the present disclosure can be suitably used as a raw material for a precursor of cathode active materials for a lithium secondary battery.

### Example 1

### (Raw Material Preparation Process)

A manganese-containing by-product containing elements shown in Table 3 below was prepared.

**[Table 3] (Unit: wt%)**

| Mn | Ca | K | Pb | Zn | Mg | Na | Si |
|---|---|---|---|---|---|---|---|
| 40.4 | 1.2 | 2.1 | 2.2 | 2.2 | 0.02 | 0.06 | 0.01 |

### (Pulverizing and Washing Process)

In order to increase leaching efficiency, the manganese-containing by-product was pulverized and washed. Accordingly, some of the water-soluble impurities such as magnesium, sodium, and potassium were removed. The removal rates were 55% for magnesium, 55% for sodium, and 62% for potassium. The average particle size of the manganese-containing by-product before pulverizing was about 800 µm. After pulverizing for 30 minutes, the average particle size of the pulverized manganese-containing by-product was about 5 µm.

### (Reduction Leaching Process)

Subsequently, 0.4 kg of pulverized manganese-containing by-product was dissolved at the room temperature for 1 hour using 30 g/L of sulfuric acid, a solid-liquid ratio of 215 g/L and 10 NL/hr of 10% sulfur dioxide gas to obtain a leached liquid having a manganese concentration of 61 g/L to 64 g/L. The solid-liquid ratio is the ratio of the by-product to sulfuric acid.

### (Neutralization Process)

Next, 0.1 kg of pulverized manganese-containing by-product and 2 NL/hr of 10% sulfur dioxide gas were added to the leached liquid, and neutralized at 50 degrees C for 1 hour to obtain a neutralized liquid having a manganese concentration of 80 g/L. The dissolution rates of manganese and zinc were 99.6% or more.

### (First Purification Process)

Subsequently, a precipitation process was performed to remove impurities present in the neutralized liquid. First, 1.2 equivalent of sodium hydrosulfide (NaSH) was added to the neutralized liquid to remove heavy metal impurities, and the mixture was reacted at 60 degrees C for 2 hours to remove more than 99% of lead and zinc through sulfide-based precipitation.

Next, 2.0 equivalent of sodium fluoride (NaF) was added to remove light metal impurities. The mixture was reacted at 70 degrees C for 2 hours to remove 30 mg/L of calcium and magnesium through fluorine-based precipitation.

### (Second Purification Process)

Next, a solvent extraction process was performed to recover manganese from the first-purified liquid after the first purification process in which purification has been performed through precipitation. At this time, 30% di-2-ethylhexyl phosphoric acid extractant was used. The pH was 4.5, the volume ratio of the organic phase to the aqueous phase was 5, and the reaction was performed at 35 degrees C. The volume ratio of the organic phase to the aqueous phase may be expressed as O/A (Organic/Aqueous). Thus, manganese was loaded from the aqueous phase to the organic phase, and manganese remaining in the aqueous phase was recovered at the content of 0.1 g/L or less.

Next, the organic phase containing manganese was reacted at a temperature 35 degrees C and an O/A of 10 using water. Thus, potassium, magnesium, sodium, and the like were scrubbed. At this time, the content of major impurities removed was 30 mg/L for potassium, 1 mg/L for magnesium, and 350 mg/L for sodium.

Next, in order to recover manganese contained in the washed organic phase into an aqueous phase, sulfuric acid and the organic phase were reacted at a temperature of 35 degrees C and an O/A of 10. Thus, manganese was recovered in the form of an aqueous manganese sulfate solution. The dissolution rate of manganese was at the level of 99.6%.

### Example 2

The average particle size of the pulverized manganese-containing by-product obtained with a reaction time of 10 minutes in the pulverizing and washing process was 130 µm. Other conditions, for example, the reaction conditions of the leaching process, are the same as those of Example 1. The reaction conditions of the leaching process include, for example, a solid-liquid ratio, a sulfuric acid concentration, a sulfur dioxide gas concentration, a reaction time, a reaction temperature, and the like. In this case, the dissolution rate of manganese in the reduction leaching process was 82%.

### Example 3

In the reduction leaching process of Example 1, the concentration of the sulfur dioxide gas was changed to 99.9%. Other conditions are the same as those of Example 1. The leaching results were the same as in Example 1. A leached liquid of manganese having a manganese dissolution rate of 99.6% or more and a manganese concentration of 61 g/L to 64 g/L was obtained. In other words, the leached liquid was obtained regardless of the concentration of the sulfur dioxide gas. The dissolution rate of manganese was at the level of 99% both when the concentration of the sulfur dioxide gas is 10% (low concentration) and when the concentration of the sulfur dioxide gas is 99.9% (high concentration). Dissolution rates were high regardless of the concentration of the sulfur dioxide gas.

### Comparative Examples

Comparative examples for comparison with the examples will be described below. In Comparative Examples 1 to 4, conditions other than the process conditions described below are the same as those of Example 1.

### Comparative Example 1

In the leaching process, manganese sulfate was produced by adding 300 g/L of sulfuric acid to a manganese-containing by-product without adding a reducing agent, and then roasting the mixture at 600 degrees C for 5 hours. This manganese sulfate was dissolved in water to obtain a leachate. The dissolution rate of manganese was 75%.

### Comparative Example 2

In the leaching process, sodium oxalate as a reducing agent was added to a manganese-containing by-product in an amount of 1 to 3 times the molar mass of manganese. At this time, the dissolution rate of manganese was 95% or more, but impurities such as sodium and the like were additionally generated. These impurities may increase the cost of additives in subsequent processes.

### Comparative Example 3

In the first purification process, 0.75 equivalent of sodium hydrosulfide was added to a manganese-containing by-product to remove heavy metal impurities. The removal rates of major impurities were 98.7% for lead and 65.2% for zinc.

### Comparative Example 4

In the first purification process, 0.5 equivalent of sodium fluoride was added to a manganese-containing by-product to remove light metal impurities. 52% of calcium as a major impurity was removed.

Although the technical spirit of the present disclosure has been described by examples shown in some embodiments and the accompanying drawings, it should be appreciated that various substitutions, modifications and alterations can be made without departing from the technical spirit and scope of the present disclosure that can be understood by those skilled in the art. Moreover, such substitutions, modifications and alterations should be construed to fall within the scope of the appended claims.

## Claims

1. A method for producing an aqueous manganese sulfate solution using a sulfur dioxide gas reduction leaching method, comprising:
a raw material preparation process of preparing a manganese-containing by-product containing manganese and impurities;
a pulverizing and washing process of pulverizing and washing the manganese-containing by-product;
a reduction leaching process of leaching a pulverized manganese-containing by-product obtained by the pulverizing and washing process;
a neutralization process of neutralizing a leached liquid produced in the reduction leaching process;
a first purification process of purifying a neutralized liquid produced in the neutralization process; and
a second purification process of further purifying a first-purified liquid produced in the first purification process,
wherein the reduction leaching process is performed using an inorganic acid and a sulfur dioxide gas.

2. The method of Claim 1, wherein an average particle size of the pulverized manganese-containing by-product is 1 *µ*m to 25 *µ*m.

3. The method of Claim 1 or 2, wherein the pulverizing and the washing are performed in the same reactor.

4. The method of Claim 1 or 2, wherein in the pulverizing and washing process, the manganese-containing by-product is washed with diluted acid and water,
the diluted acid is at least one selected from the group of sulfuric acid, hydrochloric acid,
and nitric acid, and
the concentration of the diluted acid is 10 g/L to 100 g/L.

5. The method of Claim 4, wherein an amount of water added in the pulverizing and washing process is 1.5 to 3 times an amount of the manganese-containing by-product by weight ratio.

6. The method of Claim 1 or 2, wherein the neutralization process is performed using a manganese-containing by-product as a neutralizing agent.

7. The method of Claim 6, wherein in the neutralization process, a sulfur dioxide gas is additionally injected.

8. The method of Claim 1 or 2, wherein the first purification process includes a process of removing the impurities using a precipitation method, and
the second purification process includes a process of removing the impurities using a solvent extraction method.

9. The method of Claim 8, wherein the first purification process is performed through a precipitation reaction of the impurities by adding at least one selected from the group of sodium sulfide, sodium hydrosulfide, ammonium hydrogen sulfide, and hydrogen sulfide as a precipitant.

10. The method of Claim 8, wherein the second purification process includes a loading process of extracting manganese contained in the first-purified liquid into an organic phase, a scrubbing process of washing the organic phase from which manganese is extracted with water, and a stripping process of recovering manganese in the form of the aqueous manganese sulfate solution by adding sulfuric acid to the organic phase after the scrubbing process.
